# EUROPEAN PATENT APPLICATION

(11) **EP 2 472 446 A1**
(43) Date of publication of application: **04.07.2012**
(21) Application number: 10016228.8
(22) Date of filing: 31.12.2010
(51) Int. Cl.: G06N 3/12, G06N 5/04

(54) **Autonomous artificial immune system for complex assets with a long life cycle**

(71) Applicant: Nuevas Estrategias de Mantenimiento SL., 20009 San Sebastian (ES)
(72) Inventor: Conde Mellado, Alberto, 20009 San Sebastian (ES)
(74) Representative: Temino Ceniceros, Ignacio

(57) **Abstract**

Autonomous artificial immune system for complex assets with a long life cycle, which is characterized because it is capable of extracting the normal behaviour relevant in each phase of the analyzed system's age, classify it individually and by family, manage it for complex assets with a long life cycle, and based on this, diagnose its health status.

## Description

A purpose of this invention is an autonomous artificial immune system that is capable of obtaining, storing, analyzing and managing the information contained in complex systems with a long life cycle. By means of the system proposed herein, it is possible to detect anomalies in the behaviour of these assets, diagnose them and notify the maintainers and operators so they can implement the necessary maintenance measures to prevent any down time or undesired reliability problems in the assets.

### BACKGROUND OF THE INVENTION

The main purpose of this invention is an autonomous artificial immune system for complex assets with a long life cycle, where the invention focuses on the maintenance sector, especially the maintenance of complex assets with a long life cycle. Complex asset is defined as all those assets comprised of a system, which by nature can by itself be considered complex. An example of a complex system is a railway unit or a wind turbine since they are themselves comprised of other complex systems.

Likewise, assets with a long life cycle are those assets that must remain operational while carrying out pertinent maintenance actions, for 15 or more years. However, a computer network or a communications system is not considered a complex long life cycle system, since its components are not complex by themselves and where the obsolescence of the technology used to develop these, prevents them from having a long life cycle.

Currently, there are many systems that perform real time monitoring of complex systems that are capable of on-screen display and even of recording information regarding variables or sensors that are housed in said complex system. Likewise, there are many specific inventions for diagnosing known faults in specific systems that are assembled in a railway vehicle, which serve as an example of a complex system, such as referenced patents RU2349480 "*Diagnostic and monitoring method and device for railway points, crossings, turn-outs or rail joints*" or EP0903514 "*Railway vehicle brake system with condition monitoring*"

More advanced are those that present a single system to encompass the global monitoring of a complex system, like for example JP2008057979 (A) "*Railway vehicle monitor*" or KR20000059333 (A) "*Monitoring system and method of railway rolling stock*", for a railway system.

Outside this area, patents such as US2009/0089035 A1 "*Hybrid multi-layer artificial immune system*", is geared towards computers and software, and patent US2010/0069832 "*Intelligent medical device system dynamics for biological network regulation*" focuses on the medical field, but neither of these covers the aforementioned complex systems. As far as scientific contributions is concerned, some are available that cover similar areas, but they are based on theoretical approximations that do not include the information and data generated during the life of the asset such as data sources for the system, and they do not cover the history of the diagnosed complex system, and therefore, are not able to estimate the system's remaining life as an integral part of the system. They are based on a theoretical normality instead of on the reconstruction of an experimental and individualized normality in asset families. The aforementioned articles are:
- Natural Computation Architecture of Immune Control Based on Normal Model. Zixing Cai and CO. Proceedings of 2006 IEEE. International symposium on intelligent control. Munich, Germany, October 4-6, 2006*;* and
- Multi-layer Immune Model for Fault Diagnosis. TianYuling. Supported by National Natural Science Fund (No.50335030).

### DESCRIPTION OF THE INVENTION

This invention proposes an autonomous artificial immune system that is capable of obtaining, storing, analyzing and managing the information collected in complex systems with a long life cycle, for example in high speed trains with a variable width, while also estimating the remaining life of the involved components.

This way, the system is capable of detecting anomalies in the behaviour of these assets, diagnose them and notify the maintainers and operators so they can implement the necessary maintenance measures to prevent any down time or undesired reliability problems in the assets. The system is capable of identifying cases that may cause imminent faults such as those that may cause failures in the long term. therefore, this invention enables to minimize the maintenance costs, reduce the maintenance time, anticipate faults/failures, increase the safety of monitored assets, and improve reliability, availability and maintenance. All of this without needing human supervision and imparting new knowledge to personnel involved in maintenance or operation of the system monitored by this invention.

Specifically, the system described in this invention includes at least the following:
(i) a first means for acquiring data, configured for obtaining data regarding the complex asset (a train in a particular embodiment), where this task is carried out autonomously, using wireless technology; each complex asset at the same time includes a 3G router that enables to centralize the on board information in a strategic and compressed manner; and where these first means for acquiring data are also configured for accessing all the sensed information in real time, record it on board as well as monitor it, manage its downloading in time windows meticulously studied according to the deployments of each asset (which are not always the same) in order to increase the extraction of knowledge;
(ii) a second means of processing the data configured for taking the information supplied by the first means, handle it to ensure it is compatible and store this data in a database; and where said compatibility is ensured by means of a plurality of derived parameters, which are variable or fictitious values generated by the cross checking of physical variables monitored by the first means.
(iii) a third diagnostics means configured for accessing the database where the data processed by the second means has been stored in order to, according to data mining tasks, fuzzy logic and application of complex rules, analyze the information regarding the complex assets searching for fault modes, anomalous behaviours and unfavourable tendencies. Thanks to this module, knowing the monitored system fault is not required; instead, the system itself detects the possible fault modes before they occur, depending on the degradation of components, anticipating the response to said fault.
(iv) a fourth notification means configured so that once the diagnosis has been established, depending on the type and severity, required personnel will be notified via e-mail and/or SMS, and
(v) a fifth display means configured to represent the diagnostics as well as the data obtained directly from the monitored assets, and where these means include, in a particular embodiment, an Internet portal that enables to query the historic data, generate reports, create graphs and display the knowledge in a matrix status, organized in *clusters* or knowledge blocks.

In a second aspect of the invention, the autonomous artificial immune method for complex assets with a long life cycle is characterized because it includes at least the following stages:
(a) a first data acquisition stage, where the complex type data is obtained by accessing the information sensed in real time, monitoring this information and managing its downloading in time windows according to the deployments of each asset, and where this task is carried out autonomously and using wireless technology.
(b) a second data processing stage configured for taking the information supplied by the first means, handle it to ensure it is compatible and store this data in a database; and where said compatibility is ensured by means of a plurality of derived parameters, which are variable or fictitious values generated by the cross checking of physical variables monitored by the first means.
(c) a third diagnostics stage, where a database is accessed where the data processed by the second means has been stored in order to, according to data mining tasks, fuzzy logic and application of complex rules, analyze the information regarding the complex assets searching for fault modes, anomalous behaviours and unfavourable tendencies.
(d) a fourth notification stage where, once the diagnosis has been established, depending on the type and severity, required personnel will be notified via e-mails and/or SMS, and
(e) a fifth display stage configured for displaying the diagnostics as well as the data obtained directly from the monitored assets.

All of this configured for detecting the possible fault modes before they occur according to the degradation of the studied components, with advanced notification of required personnel of the response to said fault.

Thus, the technical problem solved by this invention as compared to the state of the art, is the optimization of fault diagnostics in a complex system, diagnosing the cases that may cause imminent faults such as those that could result in a failure in the long term.

### BRIEF DESCRIPTION OF THE FIGURES

Following is a brief description of a series of drawings that help to better understand this invention and are precisely related to the embodiment of this invention, providing an illustrated example that is not intended to limit this invention.

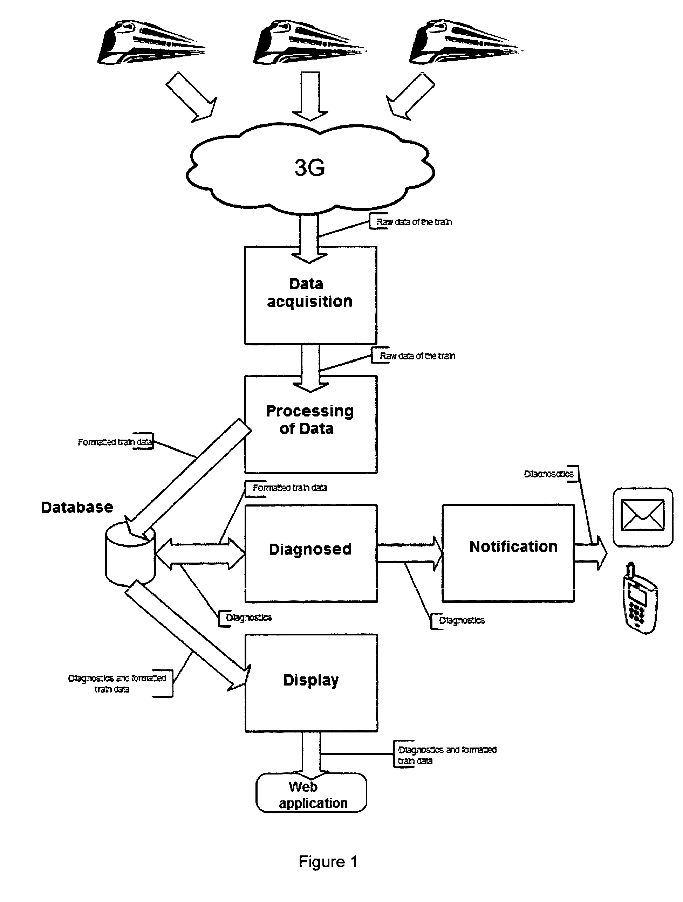

- FIG 1.: Shows a diagram of the invention's structure. In this diagram, you can see one of the modules that comprise it, as well as the relationships between these and the input and output parameters of each one.

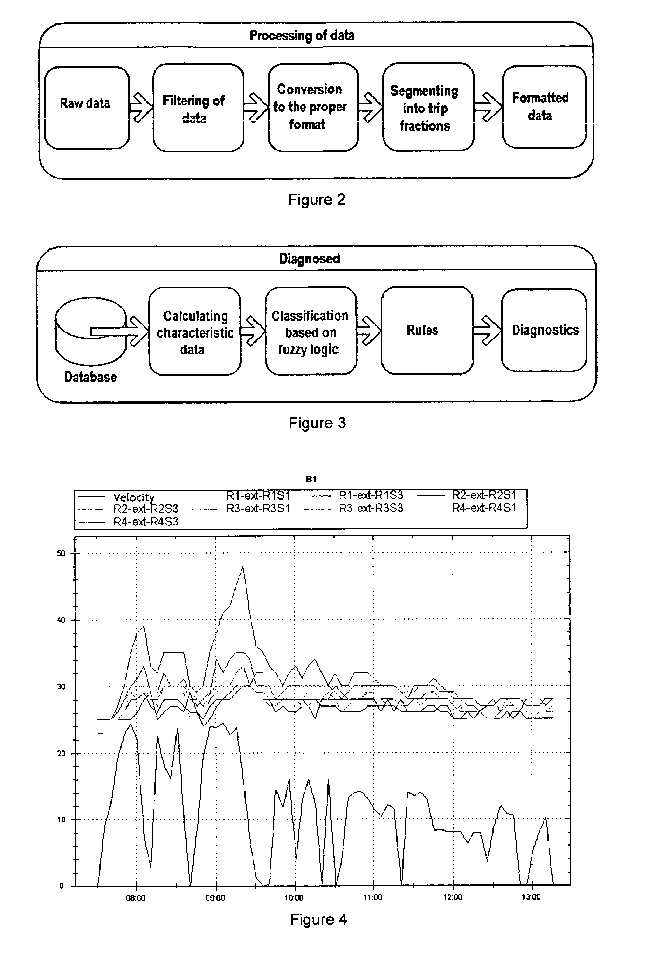

- FIG 2.: Shows a diagram of the steps that are carried out during the processing of the data.
- FIG 3.: Shows a diagram as an example of one of the sequences followed during the diagnostics process, in which a methodology used for this invention is used. Depending on the system to be diagnosed, the techniques used vary, and are not always the same. The system itself selects the technique to be used at each moment to process the information and determine the diagnosis, according to the type of data that is received.
- FIG 4.: Shows a graph in which the velocity of a high speed train is represented (at the bottom in red) along with the temperatures recorded in the exterior bearings of the four wheels of a bogie. This is an example of the information that the invention used to generate diagnoses.

### PREFERRED EMBODIMENT OF THE INVENTION

As can be seen in the figures above, the purpose of this invention consists in a system that is automatic, intelligent and autonomous for obtaining, recording, analyzing, diagnosing, extracting knowledge, managing the knowledge and displaying the variables that are monitored in complex systems, and as a non limiting example, in high speed trains with a variable width.

The system takes advantage of multiple variables that are recorded in this type of system to determine, in an autonomous manner, the status in which the different components that comprise a complex asset are in. A non limiting example of the nature of these variables may be the recorded temperature, accelerations, pressures, voltages, currents and digital alarms or any other that may be desired.

The acquiring of this information is carried out via the data acquisition module, which in this practical embodiment example uses wireless 3G technology to create a VPN network (virtual private network) between the different assets and the system described in this invention. Using this network, the data acquisition module is able to obtain the required information in an intelligent and efficient manner, and provide it to the second means so that these can process the information. In this case, the developed communication system becomes vitally important since if allows for an intelligent downloading of data, continuing from the last byte downloaded in case of loss of connection or communications coverage with the moving asset. This can be carried out thanks to a system that performs a continuous mirror comparison of the on board information and the information downloaded before starting the download. This way, the exact point in which to begin downloading data is detected.

Before storing in the database, the information must go through a filtering, formatting and segmenting of the data stage in order to adapt to the optimum operation of the tool. In this stage, the information received is modified in order to conform to the format and structure of the database and is filtered to eliminate the corrupt and incomplete cases that do not provide any value. Also, the received information is segmented into working cycles, for example in high speed and variable width railway vehicles, railway unit, disregarding the periods in which the units are parked and in this way eliminating the data that does not include operations and incorporate non useful information.

Once the stored information is available, the diagnostic module begins operating. This module is tasked with carrying out the data mining searching for possible anomalous behaviours. To accomplish this, different techniques are used depending on the origin of the data.

First of all, a module of derived parameters exists, which results from the interaction and cross checking of information from the monitored and recorded variables. This way, dimensionless variables are handled, or even with units that may lack a physical sense but provide much information to the anomaly detection process and recreation of normality in the monitored assets. This way, instead of observing faults, the system observes the behaviour in real time and classifies it as normal behaviour or abnormal behaviour. The assets spend more time providing services under normal conditions, and therefore, it is better to focus the diagnosis in these conditions, and notify of those symptoms that are not considered part of the normal status administered in time.

To detect this normality and be able to provide a diagnosis, the first step carried out by the diagnostic module is to obtain a series of values that are characteristic of each variable. These values are mainly the result of several different statistical calculations carried out of each variable but also, of the derived parameters. Also, to promote the extraction of knowledge, the system described in this patent places the information regarding different assets together and is able to compare different equipment that have the same purpose. This provides a knowledge that to date does not exist in for example, the railway sector. Therefore, the analysis is individual, but the normal base, as well as being individual for each piece of equipment, it is compared with the normality of the global sample for each system. If cases are found where a system has a normality that is different than the normality of the family of systems it belongs to, it is diagnosed as a system faults or similar. This fact also presents a very important innovation in this field.

The statistical calculations carried out as a non limiting example are the maximum, minimum and average values, percentiles, standard deviations, variations and correlations. the way to interact with these results is what enables the system to identify the value standardized parameters.

The second step consists in applying to each of these values, a set of thresholds based on fuzzy logic to classify the obtained results. Thanks to the application of this technique, we achieve a new threshold dimension, the individual threshold of the analyzed system and also the normality of the normality of the analyzed system as compared to its family, which represents an innovation that allows one derived from the size of the diagnostic when raising the analysis source and of the fuzzy frontier.

Lastly, a series of rules are used which will generate the diagnoses. For one of these rules to generate a diagnosis, all the characteristic values included in it must have been classified.

The generation of the rules can be carried out manually based on user experience (known fault modes that want to be incorporated in the system as intelligence and/or born knowledge or knowledge that has been passed down) as well as automatically thanks to the application of artificial intelligence techniques based on genetic algorithms.

The use of genetic algorithms allows gaining knowledge. Also, its application to the normality status differentiated between individual element and family of elements, allows for a family genetic inheritance, enhancing the extraction of knowledge and learning from the history of components that are not a part of a single system, like for example a high speed train with variable width, with other vehicles in the fleet, so the vehicles that travel the most or those that supply more data, may guide in the normality that is not know of the rest, predicting the evolution of its normalities and therefore, an estimate of life time remaining for the component, which is something that to date has not been achieved in this manner.

After the diagnostics are generated, they are stored in the database and the module in charge of the notifications is started. This module obtains the list of users it must inform of each diagnostic and sends an e-mail and/or SMS message to each person. These messages include a summary of the warnings that have been generated and a link for each, which takes you to a Web portal providing more information. Also, these alerts not only include information of the event that is being notified, but also provide knowledge of the diagnosed system, as well as its history and remaining life, thanks to the aforementioned techniques and modules.

The mentioned Web portal possesses different sections that enable it, to among other things, display the graph with the information contained in the database, generate reports regarding the generated diagnostics, display the status of the train fleet in real time, access histories of elements and families, access the organized knowledge, and estimating the life remaining in each component.

## Claims

1. Autonomous artificial immune system for complex assets with a long life cycle, which is characterized because it includes at least the following:
(a) a first data acquisition means, configured for obtaining complex type data by accessing the information sensed in real time, monitoring this information and managing its downloading in time windows according to the deployments of each asset, and where this task is carried out autonomously and using wireless technology;
(b) a second means of processing the data configured for taking the information supplied by the first means, handle it to ensure it is compatible and store this data in a database; and where said compatibility is ensured by means of a plurality of derived parameters, which are variable or fictitious values generated by the cross checking of physical variables monitored by the first means;
(c) a third diagnostics means configured for accessing the database where the data processed by the second means has been stored in order to, according to data mining tasks, fuzzy logic and application of complex rules, analyze the information regarding the complex assets searching for fault modes, anomalous behaviours and unfavourable tendencies;
(d) a fourth notification means configured so that once the diagnosis has been established, depending on the type and severity, required personnel will be notified via e-mail and/or SMS, and
(e) a fifth display means configured for displaying the diagnostics as well as the data obtained directly from the monitored assets;
all of this configured for detecting the possible fault modes before they occur according to the degradation of the studied components, with advanced notification of required personnel of the response to said fault.

2. System in accordance with claim 1 where the wireless means of the first means are 3G routers configured to create a VPN network between the different assets and said first means.

3. System in accordance with claims 1 and 2 where the first means include a continuous mirror comparison of the on board information and the information downloaded before starting the download, configured for an intelligent downloading of data, continuing from the last byte downloaded in case of loss of connection or communications coverage with the moving asset.

4. System in accordance with the aforementioned claims where the second means of processing the data include means for filtering, formatting and segmenting the data originating from the first means, in such a way that the format and structure of the database is homogenized and is filtered to eliminate the corrupt and incomplete cases that do not provide any value

5. System in accordance with claim 4 where the information is segmented into working cycles.

6. System in accordance with the aforementioned claims where the second means also include a module of derived parameters, which results from the interaction and cross checking of the information of the variables that are monitored and recorded, establishing a plurality of dimensionless variables.

7. System in accordance with the aforementioned claims where the third diagnostic means obtain a plurality of values that are characteristic of each physical variable and each derived parameter established in the second means, which are a result of a series of statistical calculations that are performed on them.

8. System in accordance with the aforementioned claims where the analysis carried out on the third diagnostic means is individual, but with a normalized base; and where as well as being individualized for each piece of equipment, is compared with the normality of the global sample; aii of this in a way that if cases are found where a system has a normality that is different than the normality of the family of systems it belongs to, it is diagnosed as a system fault or similar.

9. System in accordance with the aforementioned claims where the third diagnosis means apply to each of the characteristic values, a set of thresholds based on the fuzzy logic to classify the obtained results; establishing a new threshold dimension, the individual threshold of the analyzed system and also the normality of the system's normality that is analyzed as compared to its family, allowing one derived in the size of the diagnostic when raising the analysis source and of the fuzzy frontier.

10. System in accordance with the aforementioned claims where the third diagnostic means use a series of rules that will generate the diagnostics, where for one of these rules to generate a diagnostic, all the characteristic values included in it must have been classified, and where the generation of the rules can be carried out manually based on user experience as well as automatically thanks to the application of artificial intelligence techniques that are based on genetic algorithms.

11. System in accordance with claim 10 where the genetic algorithms applied to the status of normalized differences between an individual element and a family of elements, enables to have a family genetic inheritance, enhancing the extraction of knowledge and learning from the history of components that are not a part of a single system, predicting the evolution of its normalities and therefore, an estimation of the life remaining in the component.

12. System in accordance with the aforementioned claims where the fifth display means include a Web portal that allows to query the historic data, generating reports, creating graphs and displaying the knowledge in a matrix organized in *clusters* or knowledge blocks.

13. Autonomous artificial immune method for complex assets with a long life cycle, which is characterized because it includes at least the following stages:
(a) a first data acquisition stage, where the complex type data is obtained by accessing the information sensed in real time, monitoring this information and managing its downloading in time windows according to the deployments of each asset, and where this task is carried out autonomously and using wireless technology;
(b) a second data processing stage configured for taking the information supplied by the first means, handle it to ensure it is compatible and store this data in a database; and where said compatibility is ensured by means of a plurality of derived parameters, which are variable or fictitious values generated by the cross checking of physical variables monitored by the first means;
(c) a third diagnostics stage, where a database is accessed where the data processed by the second means has been stored in order to, according to data mining tasks, fuzzy logic and application of complex rules, analyze the information regarding the complex assets searching for fault modes, anomalous behaviours and unfavourable tendencies;
(d) a fourth notification stage where, once the diagnosis has been established, depending on the type and severity, required personnel will be notified via e-mails and/or SMS, and
(e) a fifth display stage configured for displaying the diagnostics as well as the data obtained directly from the monitored assets;
all of this configured for detecting the possible fault modes before they occur according to the degradation of the studied components, with advanced notification of required personnel of the response to said fault.

14. Usage of the system in claims 1 to 12 or of the method of claim 13 for diagnosing faults in complex systems.

15. Usage of the system in claims 1 to 12 or of the method of claim 13 for diagnosing faults in systems with a long life cycle.

## Amended claims

### Amended claims in accordance with Rule 137(2) EPC.

**1.** Autonomous artificial immune system which is an adaptive system, inspired by theoretical immunology and observed immune functions, principles and models, which are applied to problem solving, designed to work with complex assets with a long life cycle, which are assets which comprise interconnected parts that as a whole exhibit one or more properties (behavior among the possible properties) not obvious from the properties of the individual parts and which remain operational while carrying out pertinent maintenance actions for at least 15 years, and the autonomous artificial immune system is **characterized in that** it includes at least the following:
(a) a first data acquisition means, configured for obtaining, in real time, data of the complex assets, being said data physical variables as may be the recorded temperature, accelerations, pressures, voltages, currents and digital alarms or any other that may be desired , each complex asset includes a 3G router that enables to centralize the data in a strategic and compressed manner creating a VPN network and wireless technology is used to establish communication between the complex assets and the system;
(b) a second means of processing the data configured for filtering, formatting and segmenting in working cycles the data to conform to the format and structure of a database of the system and the data are filtered to eliminate the corrupt and incomplete cases and the second means;
(c) a third diagnostics means configured for carry out the data mining searching on the database for possible anomalous behaviours using a module of derived parameters which results from the interaction and cross checking of data from the obtained data and using rules for performing statistical calculations which generate diagnoses based on user experience or applying artificial intelligence techniques based on generic algorithms, the information data regarding different assets is placed together in the database and the third diagnostic means are able to compare different equipment that have the same purpose and when cases are found where a system has data that are different than the data of the family of systems it belongs to, it is diagnosed as a system faults or similar and an anomalous behaviour is detected; the anomalous behaviour is stored in the database;
(d) a fourth notification means configured for obtaining a list of users it must inform of each anomalous behaviour and for sending an e-mail and/or SMS to each user it must inform to, and
(e) a fifth display means configured for displaying the diagnostics as well as the data obtained directly from the monitored assets;
all of this configured for observing the behaviour of the assets in real time and classifying it as normal behaviour or abnormal behaviour so the system focus the diagnosis in the normal behaviour and notify of the data which are considered abnormal behaviour.

**2.** System in accordance with claim 1 where the first data acquisition means are able to obtain the data and provide it to the second means (download the data) by using the network created between the complex assets using a system that performs a continuous mirror comparison of the obtained data and the data downloaded before starting the download so the exact point in which to begin downloading data is selected, the system is configured for downloading of data, continuing from the last byte downloaded in case of loss of connection or communications coverage with the complex asset.

**3.** System in accordance with the aforementioned claims where the fifth display means include a Web portal that allows to query the historic data, generating reports, creating graphs and displaying the knowledge in a matrix organized in *clusters* or knowledge blocks.

**4.** Autonomous artificial immune method applied to an adaptive system, inspired by theoretical immunology and observed immune functions, principles and models, which are applied to problem solving, designed to work with complex assets with a long life cycle, which are assets which comprise interconnected parts that as a whole exhibit one or more properties (behaviour among the possible properties) not obvious from the properties of the individual parts and which remain operational while carrying out pertinent maintenance actions for at least 15 years implemented in the system of claims 1 to 3, which is **characterized in that** it includes at least the following stages:
(a) a first data acquisition stage, where data of the complex assets is obtained, in real time, being said data physical variables as may be the recorded temperature, accelerations, pressures, voltages, currents and digital alarms or any other that may be, and where a VPN network is created by the 3G routers of the complex assets to centralize the data in a strategic and compressed manner and wireless technology is used to establish communication between the complex assets and the system monitoring this data;
(b) a second data processing stage where the data are filtered, formatted and segmented in working cycles to conform to the format and structure of a database of the system and the data are filtered data to eliminate the corrupt and incomplete cases and the second means are also configured for segmenting;
(c) a third diagnostics stage, where a database is accessed where the data processed by the second means has been stored in order to, carrying out a data mining searching for possible anomalous behaviours using a module of derived parameters obtained from the interaction and cross checking of data from the obtained data and using rules for performing statistical calculations which generate diagnoses based on user experience or applying artificial intelligence techniques based on generic algorithms, the information data regarding different assets is placed together in the database and on the third diagnostics stage a comparison between different equipment that have the same purpose is made and when cases are found where a system has data that are different than the data of the family of systems it belongs to, it is diagnosed as a system faults or similar and an anomalous behaviour is detected; the anomalous behaviour is stored in the database;;
(d) a fourth notification stage where, once an anomalous behaviour has been detected a list of users the system must inform of each anomalous behaviour is obtained and an e-mail and/or SMS is sent to each user the system must inform to, and
(e) a fifth display stage configured for displaying the diagnostics as well as the data obtained directly from the monitored assets;
all of this configured for observing the behaviour of the assets in real time an classifying it as normal behaviour or abnormal behaviour so the system focus the diagnosis in the normal behaviour and notify of the data which are considered abnormal behaviour.
